# EUROPÄISCHE PATENTSCHRIFT

(11) **EP 4 721 999 B1**
(45) Veröffentlichungstag und Bekanntmachung des Hinweises auf die Patenterteilung: **09.12.2026**
(21) Anmeldenummer: 25202215.7
(22) Anmeldetag: 15.09.2025
(51) Int. Cl.: D04B 21/16, B60C 9/18, B60C 9/00

(54) **REIFEN, INSBESONDERE FÜR FAHRRÄDER**
TYRE, PARTICULARLY FOR BICYCLES
PNEU, EN PARTICULIER POUR BICYCLETTES

(30) Priorität: 01.10.2024 DE 102024209597
(43) Veröffentlichungstag der Anmeldung: 08.04.2026
(73) Patentinhaber: Continental Reifen Deutschland GmbH, 30175 Hannover (DE)
(72) Erfinder: Sudikatis, Florian, 30175 Hannover (DE)
(74) Vertreter: Continental Corporation

(56) Entgegenhaltungen:
- WO-A1-2024/069324
- DE-A1- 102006 056 921
- DE-A1- 102014 221 589
- DE-U1- 20 004 648
- KR-A- 20020 070 568
- US-A- 4 249 587
- US-A- 4 862 939
- US-A1- 2020 156 419
- US-A1- 20230 035 934
- US-B1- 6 568 446

## Beschreibung

Die Erfindung betrifft einen Reifen, insbesondere für Fahrräder, mit einer sich über Seitenwände erstreckenden Karkasse und einem außenseitig auf die Karkasse aufgebrachten und sich in einer Umlaufrichtung erstreckenden Laufstreifen, wobei zwischen Laufstreifen und Karkasse mindestens ein in Umlaufrichtung durchgängig umlaufender Pannenschutzstreifen auf Basis eines Flächengebildes angeordnet ist.

Derartige Reifen sind bekannt, wozu beispielhaft auf die DE 27 25 702 A1 verwiesen wird. Sie können als sogenannte Clincher-Reifen mit einer im Querschnitt offenen und in Wulsten mit eingebetteten Wulstkernen Karkasse oder auch als geschlossene Tubular-Reifen mit einer im Querschnitt geschlossenen Karkasse ohne Wulste und Wulstkerne ausgebildet sein. Der zwischen dem Laufstreifen und der Karkasse angeordnete Pannenschutzstreifen ist üblicherweise aus einem Gewebe aus Kett- und Schussfäden gebildet und dient je nach Ausgestaltung als Schnittschutz und/oder Durchstichschutz, um die Pannenanfälligkeit des Reifens, insbesondere Fahrradreifen zu vermindern.

Beim Einsatz der bekannten textilen Pannenschutzstreifen auf Gewebebasis besteht eine Zielkonflikt zwischen dem erreichbaren Pannenschutz und einer Erhöhung des Rollwiderstands. Je dichter und fester das Pannenschutzgewebe ausgebildet ist, umso höher fällt der erreichbare Pannenschutz aus, was allerdings zumeist mit einer Erhöhung des Rollwiderstandes durch erhöhten Walkwiderstand und geringere Hysterese einhergeht.

Man versucht daher, durch eine mehrheitliche Orientierung der Kettfäden des Gewebes im Umfangsrichtung und/oder durch Minimierung der Ondulation der im Gewebe verwobenen Fadensysteme den Rollwiderstand zu verringern, was jedoch fertigungstechnisch aufwendig ist. Rollwiderstandsoptimierte Pannenschutzstreifen aus Geweben können auch eine höhere Anzahl an Kettfäden gegenüber der Anzahl an Schussfäden aufweisen und werden ggf. doubliert aufgelegt, um eine weitere Fadenorientierung zur Verbesserung des Pannenschutzes zu erreichen.

Aus der US 4 249 587 A ist ein Fahrradreifen bekannt, der einen doppelt liegenden Pannenschutzstreifen aus einem Gewebe umfasst, um die Fadenorientierung zu optimieren.

Problematisch bei den bislang verwendeten Gewebe-Pannenschutzstreifen ist es zudem, dass sich die Kett- und Schussfäden stets orthogonal kreuzen. Damit kann der Anteil an Fäden in Umfangsrichtung nicht vergrößert werden, ohne die Verhältnisse von Kettfäden zu Schussfäden zu verändern. Die Ondulation der Kett- und Schussfäden im Gewebe erhöht zusätzlich den Rollwiderstand.

Aus der DE 199 09 648 A1 ist ferner ein Fahrradreifen, insbesondere für Mountain-Bikes bekannt, dessen Seitenwände mit einem Anscheuerschutz aus einem auf die Außenseite der Karkasse aufgebrachten Gelege versehen sind, dessen Fäden in zwei winklig zueinander orientierten Richtungen verlaufen. Eine Funktion als Pannenschutzstreifen unterhalb des Laufstreifens ist nicht vorgesehen.

Die KR 2002 0070568 A beschreibt einen Fahrzeugreifen mit einem unter dem Laufstreifen angeordneten Pannenschutz- und Durchschlagschutzstreifen aus einem gewebten Textilmaterial, der anstelle von Gürtellagen mit gekreuzten Stahlfäden verwendet wird.

In der US 2020/156419 A1 ist ein Luftreifen mit einer durchstichresistenten Lage anstelle des Gürtelpakets beschrieben, wobei die durchstichresistente Lage mit Fasern verstärkt ist.

Aus der WO 2024/069324 A1 ist ein Reifen für Rennräder bekannt, der unter dem Laufstreifen eine Schutzlage aufweist, deren Breite 50% der Reifenbreite oder weniger entspricht. Die Schutzlage kann Verstärkungscorde mit einem Winkel von mehr als 25° relativ zur Äquatorialebene des Reifens aufweisen.

Die DE 200 04 648 U1 beschreibt einen Platzschutzreifen mit zwischen der Karkasse und der Lauffläche angeordneten, aus Aramid gewebten, Platzschutzeinlagen.

Aufgabe der Erfindung ist es, einen Reifen, insbesondere Fahrradreifen der eingangs genannten Art vorzuschlagen, der die Nachteile des Standes der Technik überwindet und verbesserten Pannenschutz bei vermindertem Rollwiderstand bietet und sich einfach herstellen lässt.

Zur Lösung der gestellten Aufgabe schlägt die Erfindung die Ausgestaltung eines Reifens, insbesondere Fahrradreifens, gemäß den Merkmalen des Patentanspruches 1 vor.

Vorteilhafte Ausgestaltungen und Weiterbildungen der Erfindung sind Gegenstand der abhängigen Ansprüche.

Der erfindungsgemäße Vorschlag sieht vor, dass als Flächengebilde für den Pannenschutzstreifen ein mindestens einlagiges Fadengelege aus parallel zueinander verlaufenden Fäden vorgesehen ist, wobei die Fäden zur Umfangsrichtung einen Winkel zwischen 0 und 90° einschließen.

Erfindungsgemäß wird somit der Pannenschutzstreifen, häufig auch als Breaker bezeichnet, aus einem Fadengelege anstelle eines Gewebes hergestellt, wodurch sich mehrere Vorteile ergeben.

Zum einen kann bei einem erfindungsgemäß für den Pannenschutzstreifen vorgesehenen Fadengelege der relative Fadenwinkel zur Umfangsrichtung zwischen 0° und 90° frei definiert werden, wodurch die prozentuale Orientierung der Fäden in Umfangsrichtung des erfindungsgemäßen Reifens und die damit einhergehende Verringerung des Rollwiderstandes erhöht werden, ohne die Fadendichte und damit den erzielbaren Pannenschutz zu verringern. Zum anderen zeigt ein Fadengelege keine Ondulation der Fäden, da sich in einem Fadengelege die Fäden als Fadenschar parallel zueinander erstrecken. Auch durch diese spezifische Eigenschaft des erfindungsgemäß vorgesehenen Fadengeleges als Pannenschutzstreifen verringert sich der Rollwiderstand.

Da bei einem Fadengelege gemäß der Erfindung der relative Fadenwinkel zur Umfangsrichtung zwischen 0° und 90° frei definiert werden kann, ist es bei der erfindungsgemäßen Ausgestaltung insbesondere möglich, durch Wahl eines schräg zur Umfangsrichtung orientierten Fadenverlaufs, bei dem die Fäden des Fadengeleges mit der Umfangsrichtung einen Winkel größer 0° und kleiner 90° einschließen, den Schnittschutz des erfindungsgemäßen Pannenschutzstreifens zu optimieren.

Nach einer ersten Ausführungsform der Erfindung ist der aus dem erfindungsgemäßen Flächengebilde erstellte Pannenschutzstreifen lediglich zwischen Karkasse und Laufstreifen angeordnet.

Nach einer weiteren Ausführungsform der Erfindung kann zusätzlich zum Pannenschutzstreifen zwischen Karkasse und Laufstreifen auch vorgesehen sein, im Bereich der Seitenwände zusätzliche Seitenwandstreifen als Seitenwandverstärkung und Seitenwandpannenschutz vorzugsweise außenseitig auf die Karkasse im Bereich der Seitenwände aufzubringen, wobei die Seitenwandstreifen ebenfalls aus dem Flächengebilde zur Ausbildung des Pannenschutzstreifen gebildet sind. Alternativ kann anstelle der Anordnung separater Seitenwandstreifen zusätzlich zum Pannenschutzstreifen auch vorgesehen sein, den Pannenschutzstreifen selbst derart verbreitert auszuführen, dass seine in Umfangsrichtung verlaufenden Längsränder zumindest über einen Teilbereich der Seitenwände verlaufen und im Falle eines sogenannten Clincher-Reifens mit Wulsten maximal bis an diese Wulste heranreichen.

Nach einem Vorschlag der Erfindung umfasst das Flächengebilde ein einlagiges Fadengelege. Nach einem weiteren Vorschlag der Erfindung kann jedoch insbesondere auch eine mehrlagiges Fadengelege vorgesehen sein, bei dem schichtweise aufeinander liegende Fadenlagen miteinander kombiniert werden. Dadurch wird insbesondere die Durchstichfestigkeit des Flächengebildes für den Einsatz als Pannenschutzstreifen erhöht.

In einem solchen mehrlagigen Fadengelege kann nach einem weiteren Vorschlag der Erfindung jede Fadenlage gegenüber einer benachbarten Fadenlage einen abweichenden Winkel zur Umfangsrichtung einschließen, sodass Rollwiderstand und Schnittschutz sowie die Durchstichfestigkeit in weiten Grenzen optimiert werden können.

In einem mehrlagigen Fadengelege zur Ausbildung des erfindungsgemäßen Pannenschutzstreifens und/oder Seitenwandstreifens können nach einem weiteren Vorschlag der Erfindung alle Fadenlagen gleiche oder auch unterschiedliche Fadendichten und/oder gleiche oder unterschiedliche Fadenstärken voneinander aufweisen.

Die Fäden des Flächengebildes können auf Basis von geeigneten Fasern, beispielsweise Aramidfasern, Polyesterfasern, Glasfaser, Kohlenstoffasern oder Stahlfasern gebildet sein und beispielhaft Querschnittsabmessungen von 10 bis 3000 dtex aufweisen und Einzel- oder Multifilamentfäden umfassen.

Weitere Eigenschaftsmodifikationen des erfindungsgemäßen Reifens mit Pannenschutzstreifen können sich dadurch ergeben, dass das Fadengelege verwirkt wird, d. h. einzelne, mehrere oder alle benachbarten Fäden einer Fadenlage oder bei bi- oder multiaxialen Gelegen die einzelnen Fadenlagen miteinander durch einzelne querverlaufende Wirkfäden in ihrer Ausrichtung zueinander fixiert werden. Eine solche Verwirkung des Fadengeleges ermöglicht es zudem, den Pannenschutzstreifen weiter zu individualisieren, insbesondere indem er vor dem Einbringen zwischen Karkasse und Laufstreifen in einer Gummimasse durch Kalandrieren eingebettet wird.

Alternativ zum Verwirken kann das Fadengelege zur Ausbildung des Pannenschutzstreifens auch mit anderen geeigneten Verfahren mechanisch fixiert werden, etwa genäht, gestickt oder getuftet werden, um eine ausreichende Festigkeit zum Kalandrieren zu erreichen.

Wesentlicher Vorteil der Erfindung ist es, dass durch die frei einstellbaren relativen Fadenwinkel eine Optimierung des Rollwiderstandes und des erreichbaren Schnittschutzes vorgenommen werden kann. Durch einen frei einstellbaren Verwirkungsgrad kann zudem der Rollwiderstand und Schnittschutz weiter optimiert werden.

Da die Fadenarchitektur eines Fadengeleges keine Ondulation der Gelegefäden im Gegensatz zu den Kettfäden eines Gewebes zeigt, ergibt sich im Vergleich zu einem Gewebe ein deutlich verringerter Rollwiderstand.

Weitere Ausgestaltungen und Einzelheiten der Erfindung werden nachfolgend anhand eines Ausführungsbeispiels in der Zeichnung erläutert. Es zeigen:
- Figur 1: einen schematischen Schnitt durch einen erfindungsgemäßen Reifen in Explosionsdarstellung;
- Figur 2: den Aufbau des erfindungsgemäßen Reifens in perspektivischer Darstellung;
- Figur 3: in stark vergrößerter ausschnittsweiser Darstellung den Aufbau des Pannenschutzstreifens gemäß der Erfindung.
- Figur 4: eine weitere Ausführungsform des erfindungsgemäßen Reifens;
- Figur 5: eine weitere Ausführungsform des erfindungsgemäßen Reifens.

Aus den Figuren ist ein Ausführungsbeispiel eines Reifens, insbesondere eines Reifens für Fahrräder ersichtlich, wobei der Reifen global mit Bezugszeichen 1 gekennzeichnet ist.

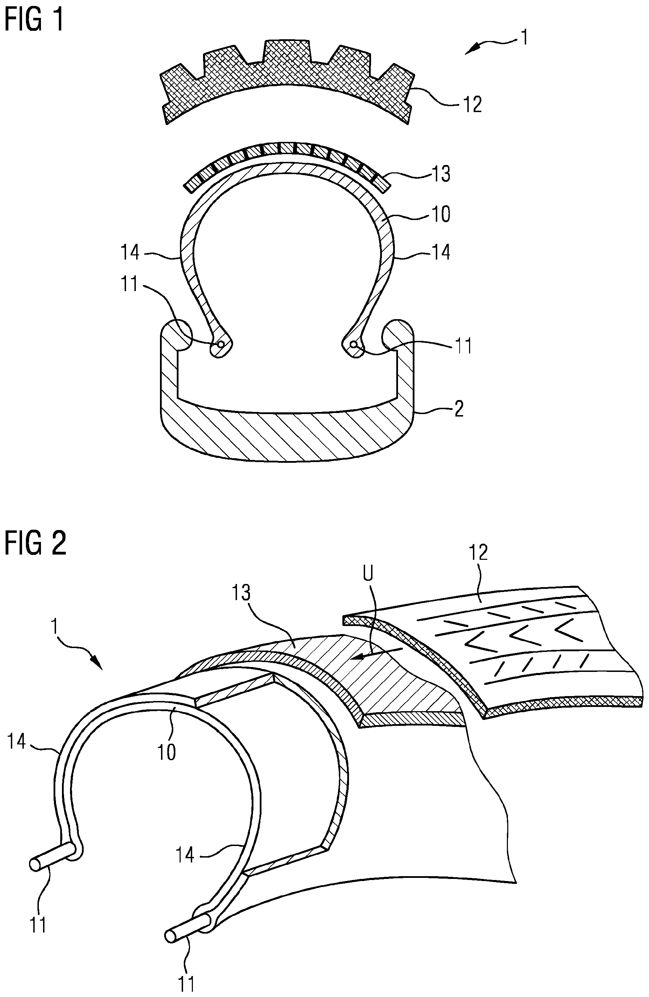

Der gemäß Figur 1 zum Einsetzen in eine Felge 2 vorgesehene Reifen 1 umfasst stark vereinfacht als wesentliche Bestandteile eine Karkasse 10 von im wesentlichen U-förmigem Querschnitt, die ausgehend von einem umfänglichen Scheitel über Seitenwände 14 in zwei mit Wulstkernen 11, beispielsweise aus Stahldraht, Aramid-oder Carbonfasern verstärkten Wulsten zum Einsetzen in der Felge 2 enden.

Anstelle eines dargestellten, sogenannten Clincher-Reifens mit Wulsten und eingebettetem Wulstkern 11 kann es sich beim Reifen 1 auch um einen im Querschnitt kreisförmig geschlossenen Tubular-Reifen handeln, der keine Wulste mit eingebettetem Wulstkern aufweist, sondern dessen geschlossene Karkasse radial innenseitig vernäht ist und der mittels Klebstoff und/oder Haftklebeband auf der Felge befestigt wird, wie es beispielhaft in der ISO 5775-1 2023 gegenübergestellt ist.

Radial außenseitig auf die Karkasse 10 wird unter Zwischenlage eines nachfolgend noch näher erläuterten Pannenschutzstreifens 13 der Laufstreifen 12 aufgebracht, mit welchem der Reifen 1 auf dem Untergrund abrollt. Der Laufstreifen 12 kann entlang seines Außenumfanges mit einem Reifenprofil versehen sein. Die Umfangsrichtung des Reifens 1, in welcher sich der Laufstreifen 12 erstreckt, ist mit Pfeil U gekennzeichnet. In dieser Umfangsrichtung U erstreckt sich der Pannenschutzstreifen 13 durchgängig zwischen Karkasse 10 und Laufstreifen 12.

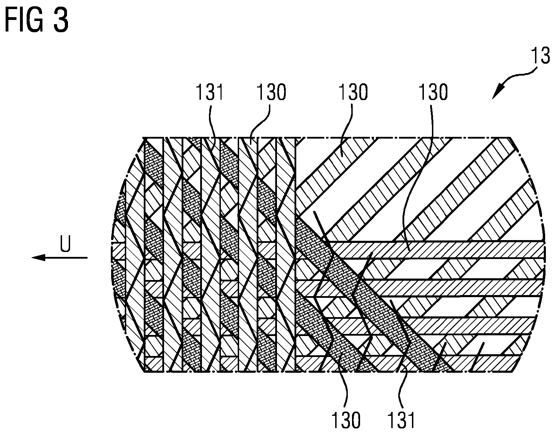

Wie insbesondere aus der vergrößerten Darstellung gemäß Figur 3 ersichtlich, wird der Pannenschutzstreifen 13 aus einem Flächengebilde gebildet, welches im dargestellten Ausführungsbeispiel ein mehrlagiges, nämlich aus insgesamt vier schichtweise aufeinander liegenden Fadenlagen gebildetes Fadengelege umfasst. Die sich in jeder einzelnen Fadenlage parallel zueinander erstreckenden und nicht ondulierten, sondern sich in der Ebene der Fadenlage geradlinig verlaufenden Fäden sind jeweils mit Bezugszeichen 130 gekennzeichnet. Sie werden in ihrer Orientierung zueinander durch unter einem Winkel querverlaufende Wirkfäden 131 fixiert, mit denen im dargestellten Ausführungsbeispiel jede einzelne Fadenlage des Fadengeleges verwirkt ist. Es könnten auch nur ausgewählte Fadenlagen oder ausgewählte Fäden miteinander verwirkt sein. Bei monoaxialen Gelegen können nur die Fäden einer Fadenlage miteinander verwirkt werden. Für mehrlagige Gewebe, die entweder biaxial oder - wie dargestellt - multiaxial ausgestaltet sind, können die einzelnen Fadenlagen und/oder die Fäden mehrerer Fadenlagen miteinander verwirkt sein. Ein solcher Wirkfaden verläuft durch die gesamte Dicke der Fadenlagen bzw. des Geleges.

Bezogen auf die Umfangsrichtung U schließt jede Fadenlage des solchermaßen ausgebildeten mehrlagigen Fadengeleges zur Bildung des Pannenschutzstreifens 13 voneinander verschiedene Winkel mit der Umfangsrichtung U ein. Die in der Zeichenebene zuoberst liegende Fadenlage schließt einen Winkel von 90° zur Umfangsrichtung U ein, die darunterliegende Fadenlage einen Winkel von 45° und die darunter angeordnete Fadenlage einen Winkel von 0° zur Umfangsrichtung U und die zuunterst liegende Fadenlage erneut einen Winkel von 45° zur Umfangsrichtung U, jedoch mit entgegengesetzter Steigung zur zweitobersten Fadenlage.

Durch diese im Fadengelege zur Ausbildung des Pannenschutzstreifens 13 frei einstellbaren relativen Fadenwinkel und die fehlende Ondulation der einzelnen Fäden 130 zeichnet sich der Pannenschutzstreifen 13 durch besonders hohe und in weiten Grenzen konfigurierbare Schnitt- und Durchstichfestlichkeiten bei gleichzeitig besonders niedrigem Rollwiderstand aus.

Aufgrund der Verwirkung mittels Wirkfäden 131 wird das Fadengelege zudem so stabilisiert, dass es in einem Kalandrierprozess vor dem Einbringen zwischen Karkasse 10 und Laufstreifen 12 in einem Kalander in eine hier nicht dargestellte Gummimasse eingebettet werden kann.

Neben der in Figur 3 dargestellten Ausgestaltung des Pannenschutzstreifens 13 als multiaxial verwirktes Fadengelege kann der Pannenschutzstreifen 13 auch aus einem mono- oder biaxial verwirkten Fadengelege gebildet sein.

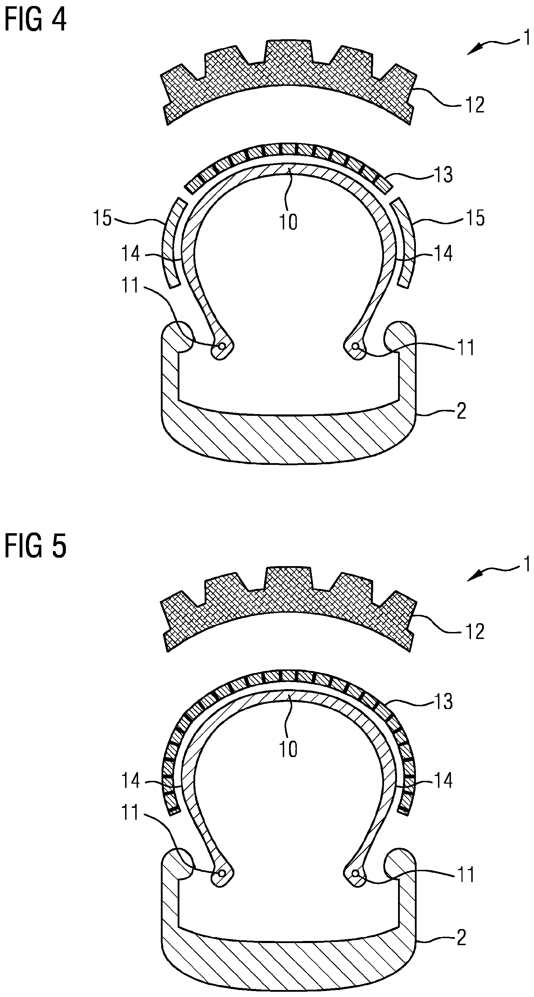

Im Ausführungsbeispiel der Figur 4 ist ein Reifen 1 ersichtlich, dessen grundsätzlicher Aufbau weitgehend demjenigen des zuvor erläuterten Reifens 1 gemäß Figuren 1 bis 3 entspricht, wobei gleiche Teile gleiche Bezugszeichen aufweisen und zur Vermeidung von Wiederholungen nicht nochmals gesondert erläutert werden.

Im Unterschied zur Ausführungsform gemäß Figur 1 ist beim Reifen gemäß Figur 4 radial außenseitig auf die Karkasse 10 im Bereich der Seitenwände 14 beidseits jeweils ein Seitenwandstreifen 15 aufgebracht, der den Reifen 1 im Bereich der Seitenwände 14 zusätzlich verstärkt und für verbesserte Pannensicherheit sorgt. Dieser Seitenwandstreifen 15 kann in eine hier nicht gesondert dargestelltes Gummimaterial eingebettet sein und wird ebenfalls aus dem ein Fadengelege umfassenden Flächengebilde hergestellt, welches auch den Pannenschutzstreifen 13 bildet. Hierbei können insbesondere auch mehrlagige Fadengelege gemäß Darstellung der Figur 3 zum Einsatz kommen, wobei weiter bevorzugt der Pannenschutzstreifen 13 und der Seitenwandstreifen 15 jeweils übereinstimmend ausgebildet sind, dass heißt aus dem gleichen Flächengebilde bestehen.

Alternativ zur gesonderten Anordnung von Seitenwandstreifen 15 zusätzlich zum Pannenschutzstreifen 13 kann nach einer weiteren Ausgestaltung gemäß Figur 5 auch vorgesehen sein, den Pannenschutzstreifen 13 selbst so gegenüber dem Laufstreifen 12 verbreitert auszuführen, dass seine in Umfangsrichtung verlaufenden Längsränder mindestens über einen Teilbereich der Seitenwände 14 reichen, wobei die Längsränder des Pannenschutzstreifens 13 maximal so nah an die Wulste mit eingebetteten Wulstkernen 11 heranreichen, dass eine Verankerung im Profil der Felge 2 noch möglich ist.

### Bezugszeichenliste

- 1:: Reifen
- 2:: Felge
- 10:: Karkasse
- 11:: Wulstkern
- 12:: Laufstreifen
- 13:: Pannenschutzstreifen
- 14:: Seitenwand
- 15:: Seitenwandstreifen
- 130:: Faden
- 131:: Wirkfaden

- U:: Umfangsrichtung

## Patentansprüche

1. Reifen (1), insbesondere für Fahrräder, mit einer sich über Seitenwände (14) erstreckenden Karkasse (10) und einem radial außenseitig auf die Karkasse (10) aufgebrachten und sich in einer Umfangsrichtung (U) erstreckenden Laufstreifen (12), wobei zwischen Laufstreifen (12) und Karkasse (10) mindestens ein in Umfangsrichtung (U) durchgängig umlaufender Pannenschutzstreifen (13) auf Basis eines Flächengebildes angeordnet ist, wobei als Flächengebilde für den Pannenschutzstreifen (13) ein mindestens einlagiges Fadengelege aus parallel zueinander verlaufenden Fäden (130) vorgesehen ist, wobei die Fäden (130) zur Umfangsrichtung (U) einen Winkel zwischen 0 und 90 ° einschließen, **dadurch gekennzeichnet, dass** das Fadengelege mechanisch fixiert ist.

2. Reifen (1) nach Anspruch 1, **dadurch gekennzeichnet, dass** im Bereich der Seitenwände (14) zusätzlich zum Pannenschutzstreifen (13) Seitenwandstreifen (15) aus dem Flächengebilde angeordnet sind oder der Pannenschutzstreifen (13) sich zumindest über einen Teilbereich der Seitenwände (14) erstreckt.

3. Reifen (1) nach Anspruch 1 oder 2, **dadurch gekennzeichnet, dass** das Flächengebilde ein mehrlagiges Fadengelege aus schichtweise aufeinanderliegenden Fadenlagen umfasst.

4. Reifen (1) nach Anspruch 3, **dadurch gekennzeichnet, dass** jede Fadenlage des mehrlagigen Fadengeleges gegenüber einer benachbarten Fadenlage einen abweichenden Winkel zur Umfangsrichtung (U) einschließt.

5. Reifen (1) nach einem der Ansprüche 1 bis 4, **dadurch gekennzeichnet, dass** jede Fadenlage unterschiedliche Fadendichten und/oder unterschiedliche Fadenstärken enthält.

6. Reifen (1) nach einem der Ansprüche 1 bis 5, **dadurch gekennzeichnet, dass** die Fäden (130) des Pannenschutzstreifens (13) auf Basis von Aramidfasern, Polyesterfasern, Glasfasern, Kohlenstoffasern und/oder Stahlfasern gebildet sind.

7. Reifen (1) nach einem der Ansprüche 1 bis 6, **dadurch gekennzeichnet, dass** das Fadengelege durch Verwirken, Vernähen oder Versticken mechanisch fixiert ist.

8. Reifen (1) nach einem der Ansprüche 1 bis 7, **dadurch gekennzeichnet, dass** der Pannenschutzstreifen (13) vor dem Einbringen zwischen Karkasse (10) und Laufstreifen (12) in einer Gummimasse durch Kalandrieren und/oder Rakeln eingebettet ist.

## Claims

1. Tyre (1), in particular for bicycles, having a carcass (10) which extends via sidewalls (14), and having a tread (12) which is applied to the radially outer side of the carcass (10) and extends in a circumferential direction (U), wherein at least one puncture-protection strip (13) based on a planar structure and encircling continuously in the circumferential direction (U) is arranged between the tread (12) and the carcass (10), wherein an at least single-ply scrim composed of threads (130) running parallel to one another is provided as the planar structure for the puncture-protection strip (13), wherein the threads (130) include an angle of between 0 and 90° with the circumferential direction (U), **characterized in that** the scrim is fixed mechanically.

2. Tyre (1) according to Claim 1, **characterized in that**, in addition to the puncture-protection strip (13), sidewall strips (15) composed of the planar structure are arranged in the region of the sidewalls (14), or the puncture-protection strip (13) extends at least over a sub-region of the sidewalls (14).

3. Tyre (1) according to Claim 1 or 2, **characterized in that** the planar structure comprises a multi-ply scrim composed of thread plies lying one on top of the other in layers.

4. Tyre (1) according to Claim 3, **characterized in that** each thread ply of the multi-ply scrim includes a different angle with the circumferential direction (U) in comparison with an adjacent thread ply.

5. Tyre (1) according to one of Claims 1 to 4, **characterized in that** each thread ply contains different thread densities and/or different thread thicknesses.

6. Tyre (1) according to one of Claims 1 to 5, **characterized in that** the threads (130) of the puncture-protection strip (13) are formed on the basis of aramid fibres, polyester fibres, glass fibres, carbon fibres and/or steel fibres.

7. Tyre (1) according to one of Claims 1 to 6, **characterized in that** the scrim is fixed mechanically by way of knitting, sewing or embroidery.

8. Tyre (1) according to one of Claims 1 to 7, **characterized in that** the puncture-protection strip (13) is embedded in a rubber compound by way of calendering and/or knife-coating prior to being introduced between the carcass (10) and the tread (12).

## Revendications

1. Pneumatique (1), en particulier pour bicyclettes, présentant une carcasse (10) s'étendant sur des flancs (14) et une bande de roulement (12) appliquée de manière radiale sur le côté externe de la carcasse (10) et s'étendant dans une direction périphérique (U), dans lequel au moins une bande de protection contre les crevaisons (13) à base d'une structure plane est agencée de manière circonférentiellement continue dans la direction périphérique (U) entre la bande de roulement (12) et la carcasse (10), dans lequel une nappe de fils au moins monocouche constituée de fils (130) s'étendant parallèlement les uns aux autres est prévue comme structure plane pour la bande de protection contre les crevaisons (13), dans lequel les fils (130) forment, par rapport à la direction périphérique (U), un angle entre 0 et 90°, **caractérisé en ce que** la nappe de fils est fixée mécaniquement.

2. Pneumatique (1) selon la revendication 1, **caractérisé en ce que** des bandes (15) de flanc constituées par la structure plane sont agencées au niveau des flancs (14), en plus de la bande de protection contre les crevaisons (13), ou la bande de protection contre les crevaisons (13) s'étend au moins sur une zone partielle des flancs (14).

3. Pneumatique (1) selon la revendication 1 ou 2, **caractérisé en ce que** la structure plane comprend une nappe multicouche de fils constituée par des couches de fils superposées couche par couche.

4. Pneumatique (1) selon la revendication 3, **caractérisé en ce que** chaque couche de fils de la nappe multicouche de fils forme, par rapport à une couche de fils adjacente, un angle différent avec la direction périphérique (U).

5. Pneumatique (1) selon l'une des revendications 1 à 4, **caractérisé en ce que** chaque couche de fils contient des densités différentes de fils et/ou des épaisseurs différentes de fils.

6. Pneumatique (1) selon l'une des revendications 1 à 5, **caractérisé en ce que** les fils (130) de la bande de protection contre les crevaisons (13) sont formés à base de fibres d'aramide, de fibres de polyester, de fibres de verre, de fibres de carbone et/ou de fibres d'acier.

7. Pneumatique (1) selon l'une des revendications 1 à 6, **caractérisé en ce que** la nappe de fils est fixée mécaniquement par crochetage, par couture ou par broderie.

8. Pneumatique (1) selon l'une des revendications 1 à 7, **caractérisé en ce que** la bande de protection contre les crevaisons (13) est incorporée dans une masse de caoutchouc par calandrage et/ou par raclage avant l'introduction entre la carcasse (10) et la bande de roulement (12).
